# EUROPÄISCHE PATENTSCHRIFT

(11) **EP 2 556 271 B1**
(45) Veröffentlichungstag und Bekanntmachung des Hinweises auf die Patenterteilung: **04.03.2015**
(21) Anmeldenummer: 11708384.0
(22) Anmeldetag: 08.03.2011
(51) Int. Cl.: F16H 3/64, B30B 1/26

(54) **GETRIEBEEINHEIT UND ANORDNUNG FÜR EINE STANZPRESSE**
GEAR UNIT AND ARRANGEMENT FOR A PUNCHING PRESS
UNITÉ D'ENGRENAGE ET AGENCEMENT POUR PRESSE DE DÉCOUPAGE

(30) Priorität: 09.04.2010 EP 10003804
(43) Veröffentlichungstag der Anmeldung: 13.02.2013
(73) Patentinhaber: BRUDERER AG, CH-9320 Frasnacht (CH)
(72) Erfinder: HAFNER, Josef, Thomas, CH-9404 Rorschacherberg (CH)
(74) Vertreter: Münch, Martin Walter
(86) Internationale Anmeldenummer: PCT/CH2011/000043
(87) Internationale Veröffentlichungsnummer: WO 2011/123959

(56) Entgegenhaltungen:
- EP-A1- 0 439 684
- EP-A2- 0 519 121
- WO-A1-2009/067416
- CH-A- 404 324
- DE-A1- 2 804 061
- DE-A1- 3 525 208
- DE-B- 1 174 736
- US-A- 3 797 623

## Beschreibung

### TECHNISCHES GEBIET

Die vorliegende Erfindung betrifft eine Getriebeeinheit mit mehreren hintereinandergeschalteten Planetengetriebestufen sowie eine Anordnung umfassend eine solche Getriebeeinheit gemäss den Oberbegriffen der unabhängigen Patentansprüche.

### STAND DER TECHNIK

Getriebeeinheiten mit mehreren hintereinander geschalteten Planetengetriebestufen kommen dort zum Einsatz, wo bei niedriger Drehzahl extrem hohe Drehmomente benötigt werden.

Wird die extreme Untersetzung der hintereinander geschalteten Planetengetriebestufen nur zeitweise benötigt und im Normalbetrieb eine kleinere oder gar keine Untersetzung benötigt, was z.B. bei Schleichganggetrieben für mechanische Pressen der Fall ist, so ist es wünschenswert, dass das Getriebe zusätzlich das für den Normalbetrieb erforderliche Übersetzungsverhältnis zur Verfügung stellt und werkzeuglos zwischen den beiden Übersetzungsverhältnissen hin und her geschaltet werden kann, zur Ermöglichung eines einfachen Wechsels zwischen Normalbetrieb und Schleichgangbetrieb.

Dabei ist es oftmals nicht nur wichtig, dass das Getriebe kostengünstig und robust ist, sondern dass es zudem möglichst kompakt aufgebaut ist, so dass es in vorhandene Maschinenbauteile, z.B. in die Riemenscheibe des Riementriebs der Presse, integriert werden kann.

Eine Getriebeeinheit mit den Merkmalen des Oberbegriffs von Anspruch 1 ist aus Dokument DE 35 25 208 A1 bekannt.

### DARSTELLUNG DER ERFINDUNG

Es stellt sich deshalb die Aufgabe, eine schaltbare Getriebeeinheit mit mehreren hintereinandergeschalteten Planetengetriebestufen zur Verfügung zu stellen, welche kostengünstig, robust und möglichst kompakt aufgebaut ist.

Diese Aufgabe wird durch die Getriebeeinheit gemäss Patentanspruch 1 gelöst.

Demgemäss betrifft ein erster Aspekt der Erfindung eine Getriebeeinheit mit mehreren hintereinandergeschalteten Planetengetriebestufen, welche sich bevorzugterweise zum Verbinden eines Antriebsmotors, wie z.B. ein Elektromotor oder ein Hydraulikmotor, mit einer Arbeitsmaschine, und zwar bevorzugterweise mit einem Stanzautomaten bzw. mit einer Stanzpresse, eignet. Dabei ist die Getriebeeinheit schaltbar, derart, dass sie wahlweise ein erstes oder ein zweites Übersetzungsverhältnis aufweist. Unter einer "schaltbaren" Getriebeeinheit wird hier eine Getriebeeinheit verstanden, deren Übersetzungsverhältnis ohne bauliche Veränderungen bzw. Eingriffe verändert werden kann, bevorzugterweise werkzeuglos durch Betätigung von Umschaltmitteln, wie z.B. ein Umschalthebel oder ein Betätigungsknopf.

Die Planetengetriebestufen der Getriebeeinheit umfassen jeweils ein Hohlrad, ein Sonnenrad und mehreren an einem Planetenradträger gelagerte Planetenräder, wobei jeweils das Sonnenrad der in Kraftflussrichtung nachfolgenden Planetengetriebestufe vom Planetenradträger der vorangehenden Planetengetriebestufe gebildet ist oder drehsteif in Rotationsrichtung dieses Planetenradträgers mit diesem verbunden oder verbindbar ist.

Weiter umfasst die Getriebeeinheit ein Antriebselement, welches das Sonnenrad der in Kraftflussrichtung ersten Planetengetriebestufe bildet oder drehsteif in Rotationsrichtung dieses Sonnenrades mit diesem verbunden oder verbindbar ist, zum Antreiben des Sonnenrades.

Dabei sind ein Teil der Planetenradträger oder alle Planetenradträger der Planetengetriebestufen auf dem Antriebselement gelagert, und zwar bevorzugterweise mit Wälzlagern.

Auch umfasst die Getriebeeinheit ein Abtriebselement, welches den Planetenradträger der letzten der hintereinander geschalteten Planetengetriebestufen bildet oder drehsteif in Rotationsrichtung dieses Planetenradträgers mit diesem verbunden oder verbindbar ist, zum Antreiben eines mit der Getriebeeinheit anzutreibenden Bauteils bzw. einer damit anzutreibenden Maschine.

Dabei überträgt der Abschnitt des Antriebselements, auf welchem ein Teil der Planetenradträger oder alle Planetenradträger gelagert sind, im bestimmungsgemässen Betrieb das Drehmoment zum Antrieb des Sonnenrades der ersten Planetengetriebestufe.

Durch die Erfindung wird es möglich eine schaltbare Getriebeeinheit mit mehreren hintereinander geschalteten Planetengetriebestufen zur Verfügung zu stellen, welche kostengünstig, robust und sehr kompakt aufgebaut ist und bei welcher das Antriebselement und das Abtriebselement von der gleichen Getriebeseite her zugänglich sind.

In einer bevorzugten Ausführungsform der Getriebeeinheit ist das Sonnenrad der ersten Planetengetriebestufe der Getriebeeinheit an einem Ende des Antriebselements angeordnet. Hierdurch wird eine kompakte Bauweise der Getriebeeinheit weiter begünstigt.

In einer weiteren bevorzugten Ausführungsform der Getriebeeinheit ist das Antriebselement im Bereich des Sonnenrades der ersten Planetengetriebestufe gelagert, bevorzugterweise in mindestens einem Wälzlager, wobei es zudem bevorzugt ist, das die Lagerung an einem im Betrieb ortfesten Bauteil erfolgt.

Dabei ist es weiter bevorzugt, dass die Lagerung als Festlagerung ausgebildet ist, bevorzugterweise mit einem Zylinderrollenlager als Axiallager und einem Nadellager als Radiallager.

Diese Konstruktionsweisen begünstigen eine kostengünstige und robuste Lagerung des Antriebselements.

Wird dabei zumindest ein Teil der Lagerung innerhalb des Sonnenrades der ersten Planetengetriebestufe angeordnet, was bevorzugt ist, so lassen sich insbesondere in Kombination mit einem am Ende des Antriebselements angeordneten Sonnenrad der ersten Planetengetriebestufe besonders kompakte Lagerungslösungen realisieren.

In noch einer weiteren bevorzugten Ausführungsform der Getriebeeinheit ist der Abschnitt des Antriebselements, auf welchem ein Teil oder alle Planetenradträger gelagert sind, bevorzugterweise zusammen mit dem Sonnenrad der ersten Planetengetriebestufe als einstückiges Bauteil ausgebildet ist, und zwar bevorzugterweise als einstückiger Hohlwellenkörper. Eine derartige Ausgestaltung des Antriebselements ist besonders robust und hilft die Anzahl der Bauteile zu reduzieren.

Bevorzugterweise ist das Abtriebselement der erfindungsgemässen Getriebeeinheit derart ausgebildet, dass es eine direkte Ankopplung der Getriebeeinheit an eine Arbeitsmaschine ermöglicht.

Dabei ist es weiter bevorzugt, dass die Getriebeeinheit in ein Gehäuse integriert ist, welches gleichzeitig das Abtriebselement bildet und an seinem Aussenumfang eine Lauffläche für einen Keilriemen oder einen Flachriemen aufweist, oder eine Verzahnung für einen Zahnriemen, eine Kette oder ein Zahnrad, zum Ankoppeln an ein entsprechendes Antriebselement einer Arbeitsmaschine. D.h. das Gehäuse, welches die Getriebeeinheit weitestgehend oder vollständig umgibt, rotiert im Betrieb um die übrigen Getriebekomponenten herum und ist derartig ausgestaltet, dass seine Rotationsbewegung mittels geeigneter Übertragungsmittel wie z.B. Flach-, Keil- oder Zahnriemen, Ketten oder Zahnrädern auf eine Antriebwelle einer Arbeitsmaschine übertragen werden kann. Auf diese Weise lassen sich besonders kompakte erfindungsgemässe Getriebeeinheiten bilden, welche sich zudem auch gut in vorhandene Maschinenbauteile, z.B. in die Riemenscheibe des Riementriebs einer Presse, integrieren lassen.

Auch ist es dabei bevorzugt, dass der Planetenradträger der letzten Getriebestufe starr mit dem Gehäuse der Getriebeeinheit verbunden ist. Hierdurch wird eine kompakte und robuste Bauweise weiter begünstigt.

Weiter ist es bevorzugt, dass das Antriebselement der Getriebeeinheit derartig ausgebildet ist, dass es eine direkte Ankopplung der Getriebeeinheit an einen Antriebsmotor ermöglicht. Insbesondere in Kombination mit einem Abtriebselement, welches eine direkte Ankopplung der Getriebeeinheit an eine Arbeitsmaschine ermöglicht, ergibt sich so eine universell einsetzbare Getriebeeinheit.

In noch einer weiteren bevorzugten Ausführungsform der Getriebeeinheit sind die Hohlräder sämtlicher Planetengetriebestufen von einem gemeinsamen, bevorzugterweise aus mehreren Teilen gebauten Bauteil gebildet, wodurch sich die Fertigung vereinfachen lässt und bei Verschleiss die Hohlräder einzeln ausgetauscht werden können.

Weiter ist es bevorzugt, dass das anspruchsgemässe erste Übersetzungsverhältnis der Getriebeeinheit 1:1 ist, d.h. das Abtriebselement dreht im Betrieb mit der gleichen Drehzahl wie das Antriebselement.

Ist dabei die Getriebeeinheit derartig ausgebildet, dass bei gewähltem ersten Übersetzungsverhältnis die Getriebeeinheit gesperrt ist, was bevorzugt ist, so ergibt sich der Vorteil, dass beim Betrieb im ersten Übersetzungsverhältnis keine Reibungsverluste im Getriebe entstehen, es also praktisch zu keinen Leistungsverlusten zwischen Antriebs- und Abtriebselement kommt.

Dabei ist es im letztgenannten Fall bei Ausführungsformen der Getriebeeinheit, bei denen die Hohlräder sämtlicher Planetengetriebestufen von einem gemeinsamen Bauteil gebildet sind, bevorzugt, dass die Schaltbarkeit der Getriebeeinheit dadurch gegeben ist, dass das die Hohlräder der Planetengetriebestufen bildende Bauteil wahlweise mit einer im Betrieb stillstehenden Körperlichkeit oder dem Antriebselement koppelbar ist. Auf diese Weise kann zwischen der zweiten Übersetzung und dem Sperren des Getriebes (erste Übersetzung ist 1:1) hin und her geschaltet werden.

Hierzu ist die Getriebeeinheit mit Vorteil derartig ausgebildet, dass das die Hohlräder der Planetengetriebestufen bildende Bauteil zum wahlweisen Koppeln mit der im Betrieb stillstehenden Körperlichkeit und dem Antriebselement axial zwischen einer ersten und einer zweiten Position verschiebbar ist, jeweils unter Erzeugung eines Kraft- und/oder Formschlusses in Rotationsrichtung mit der im Betrieb stillstehenden Körperlichkeit bzw. mit dem Antriebselement. Eine solche Konstruktionsweise ermöglicht mechanisch robuste und gleichzeitig kompakte Lösungen.

Dabei ist die Getriebeeinheit bevorzugterweise zudem derartig ausgebildet ist, dass das Verschieben des die Hohlräder der Planetengetriebestufen bildenden Bauteils zumindest in eine der beiden Verschieberichtungen mittels eines pneumatischen oder hydraulischen Antriebs bewirkbar ist, bevorzugterweise mittels einer oder mehrerer pneumatischer Kolben-Zylinder-Einheiten. Hierdurch kann das Umschalten der Getriebeeinheit auf einfache Weise automatisiert werden bzw. mittels einer zentralen Maschinensteuerung erfolgen.

Auch ist es dabei bevorzugt, dass die Getriebeeinheit derartig ausgebildet ist, dass das Verschieben des die Hohlräder der Planetengetriebestufen bildenden Bauteils in einer ersten der beiden Verschieberichtungen mittels des pneumatischen Antriebs entgegen einer von einem oder mehreren elastischen Federelementen erzeugten federnden Rückstellkraft bewirkbar ist und bei Drucklosschaltung des pneumatischen oder hydraulischen Antriebs eine Rückstellung durch Verschiebung des die Hohlräder der Planetengetriebestufen bildenden Bauteils in der zweiten, der ersten Verschieberichtung entgegen gesetzten Verschieberichtung erfolgt. Auf diese Weise weist die Getriebeeinheit bei drucklosem pneumatischen oder hydraulischen Antrieb eine definierte Schaltstellung auf, wobei es bevorzugt ist, wenn dies die Schaltstellung ist, in welcher die Getriebeeinheit das anspruchsgemässe erste Übersetzungsverhältnis aufweist, da dies üblicherweise für den Normalbetrieb vorgesehen ist und es so bei einem Systemausfall im Normalbetrieb nicht zu einem Umschalten der Getriebeeinheit kommen kann.

In noch einer weiteren bevorzugten Ausführungsform der Getriebeeinheit weisen die Planetengetriebestufen eine unterschiedliche Anzahl Planetenräder auf, derart, dass eine Planetengetriebestufe je mehr Planetenräder aufweist, je mehr Planetengetriebestufen ihr vorgeschaltet sind oder, mit anderen Worten gesagt, je weiter sie in Kraftflussrichtung stromabwärts vom Antriebselement angeordnet ist. Es sind also mit zunehmendem Drehmoment bzw. mit abnehmender Drehzahl mehr Planetenräder vorhanden. Hierdurch kann die Belastung der einzelnen Planetenräder verhältnismässig gering gehalten werden.

Weisen die Planetenräder sämtlicher Planetengetriebestufen der Getriebeeinheit einen identischen Durchmesser auf, was bevorzugt ist, so können sie identisch ausgebildet werden. Dies ergibt den Vorteil, dass nur ein Planetenradtyp verwendet werden muss, wodurch sich Kosten bei der Herstellung und der Lagerhaltung senken lassen.

Aus den gleichen Gründen wie zuvor erwähnt ist es weiter bevorzugt, dass die Hohlräder sämtlicher Planetengetriebestufen der Getriebeeinheit einen identischen Durchmesser aufweisen und bevorzugterweise identisch bezüglich ihres Verzahnungsmoduls sind.

In noch einer weiteren bevorzugten Ausführungsform der Getriebeeinheit ist das anspruchsgemässe zweite Übersetzungsverhältnis eine Untersetzung grösser 1:15, d.h. das Antriebselement dreht im Betrieb mehr als fünfzehn mal schneller als das Abtriebselement. Etwa ab diesem Untersetzungsverhältnis ergeben sich beim Antrieb von typischen Stanzpressen mit Kurbeltrieb und Schwungrad über die Getriebeeinheit sowohl im Normalbetrieb als auch im Schleichgangbetrieb etwa vergleichbare Stanzkräfte.

Ein zweiter Aspekt der Erfindung betrifft eine Anordnung mit einer Getriebeeinheit gemäss dem ersten Aspekt der Erfindung, welche zudem folgende Komponenten umfasst:
a) eine Stanzpresse bzw. einen Stanzautomaten mit einem Kurbel- oder Exzentertrieb zur Umwandlung der rotatorischen Bewegung einer Antriebswelle der Stanzpresse in die Stanzbewegung des Werkzeugs und mit einem mit der Antriebswelle koppelbaren oder gekoppelten Schwungrad; und
b) einen Antriebsmotor zum Antreiben der Antriebswelle der Stanzpresse.

Dabei ist das Antriebselement der Getriebeeinheit mit dem Antriebsmotor gekoppelt oder über eine schaltbare Kupplung koppelbar und das Abtriebselement der Getriebeeinheit ist mit der Antriebswelle der Stanzpresse bzw. des Stanzautomaten oder mit dem Schwungrad gekoppelt oder über eine schaltbare Kupplung koppelbar.

Die Bildung derartiger Anordnungen stellt eine bevorzugte Verwendung der erfindungsgemässen Getriebeeinheit dar und lässt die Vorteile der Erfindung deutlich zu Tage treten, da es Dank der Getriebeeinheit bei solchen Anordnungen möglich wird, die Stanzpresse bzw. den Stanzautomaten mit einem für den Normalbetrieb mit Schwungrad dimensionierten Motor wahlweise im Normalbetrieb mit hohen Stanzfrequenzen oder im Schleichgangbetrieb zum Einrichten und Austesten von Stanzwerkzeugen zu betreiben.

In einer bevorzugten Ausführungsform der Anordnung sind der Antriebsmotor und die Übersetzungsverhältnisse der Getriebeeinheit derartig dimensioniert, dass die maximale Stanzkraft, die im Betrieb mit demjenigen Übersetzungsverhältnis der Getriebeeinheit bei welchem die langsamere Drehung der Antriebswelle resultiert (Schleichgangbetrieb) am Stössel der Stanzpresse erzeugbar ist, gleich gross oder grösser ist als die maximale Stanzkraft, die im Betrieb mit dem Übersetzungsverhältnis der Getriebeeinheit bei welchem die schnellere Drehung der Antriebswelle resultiert (Normalbetrieb) am Stössel der Stanzpresse erzeugbar ist. Der Antriebsmotor und die Übersetzungsverhältnisse sind also derartig gewählt, dass im Schleichgangbetrieb das durch die Getriebeuntersetzung vergrösserte Drehmoment des Antriebsmotors gleich gross oder grösser ist wie im Normalbetrieb die Summe aus dem Drehmoment des Antriebsmotors und dem vom Schwungrad für den Stanzprozess zur Verfügung gestellten Drehmoment. Hierdurch wird es möglich, die Stanzpresse bzw. den Stanzautomaten sowohl im Normalbetrieb mit hohen Stanzfrequenzen als auch im Schleichgangbetrieb zum Einrichten und Austesten von Stanzwerkzeugen mit voller Stanzkraft zu betreiben.

In einer bevorzugten Ausführungsform der Anordnung wird das Schwungrad vom Gehäuse der Getriebeeinheit gebildet, was den Vorteil ergibt, dass die Anlage besonders kompakt ausgeführt werden kann.

### KURZE BESCHREIBUNG DER ZEICHNUNGEN

Weitere bevorzugte Ausführungen der Erfindung ergeben sich aus den abhängigen Ansprüchen und aus der nun folgenden Beschreibung anhand der Figuren. Dabei zeigen:
Fig. 1 einen Längsschnitt durch eine erfindungsgemässe Getriebeeinheit;
Fig. 2 einen Teil einer Rückansicht einer erfindungsgemässen Anordnung mit der Getriebeeinheit aus Fig. 1; und
Fig. 3 einen Teil einer Seitenansicht der Anordnung aus Fig. 2.

### WEGE ZUR AUSFÜHRUNG DER ERFINDUNG

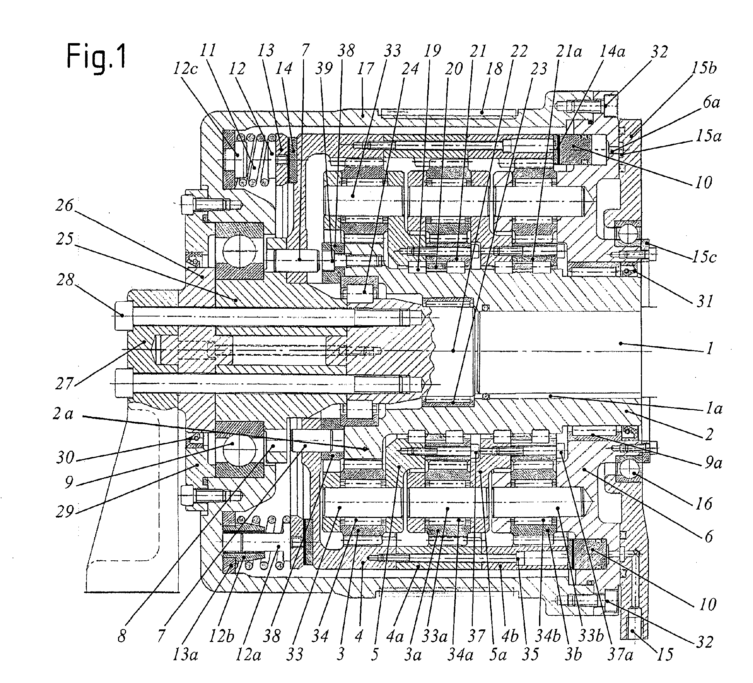

Fig. 1 zeigt eine erfindungsgemässe schaltbare Getriebeeinheit mit drei hintereinander geschalteten Planetengetriebestufen im vertikalen Längsschnitt, in der oberen Hälfte in einem Schaltzustand, in dem das Getriebe wirksam ist und in der unteren Hälfte in einem Zustand, in dem das Getriebe gesperrt ist (d.h. Übersetzungsverhältnis 1:1).

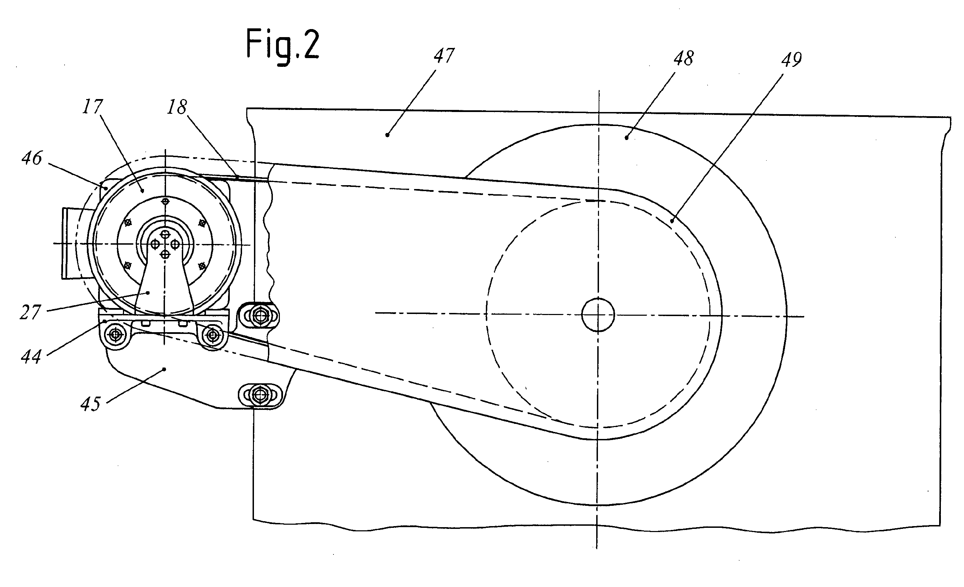

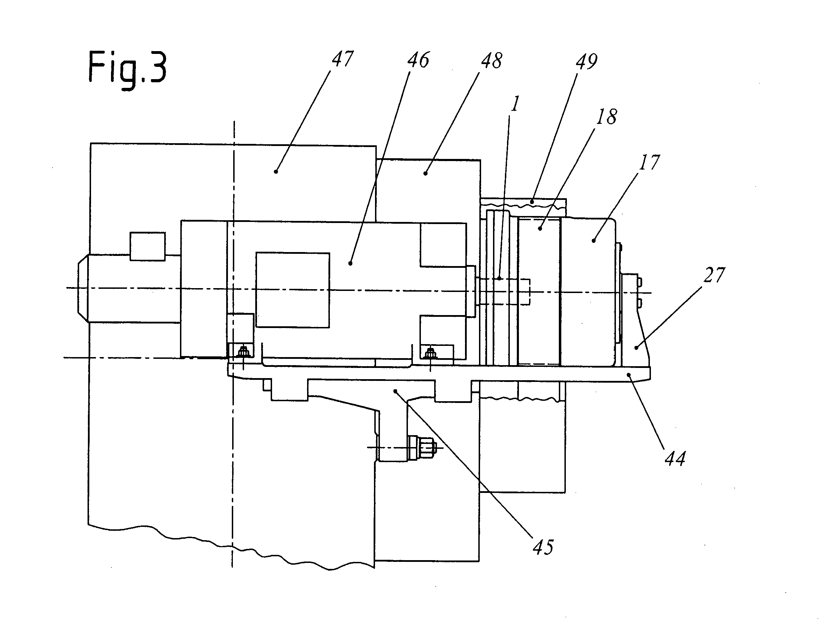

Wie zu erkennen ist, weist die Getriebeeinheit ein zentrales Antriebselement 2 auf, welches an einem seiner beiden Enden ah eine horizontal liegende Welle 1 eines Elektromotors 46 (in Figuren 2 und 3 gezeigt) angekoppelt ist und an seinem anderen Ende das Sonnenrad 2a der ersten Planetengetriebestufe bildet. Im bestimmungsgemässen Betrieb treibt der Elektromotor 46 mittels Passfederverbindung 1a das Antriebselement 2 und über dieses das Sonnenrad 2a der ersten Planetengetriebestufe an. Das Antriebselement 2 ist im Bereich des von ihm gebildeten Sonnenrades 2a auf einer festen Achse 22, 25, 26 mit einem Rollenlager 24 axial und radial gelagert und mit einem Nadellager 23 ausschliesslich radial gestützt. Dabei ist das Rollenlager 24 innerhalb des Sonnenrades 2a angeordnet.

In der ersten Planetengetriebestufe der Getriebeeinheit sind vier erste Planetenräder 3 mit dem ersten Sonnenrad 2a und einem innen verzahnten topfförmigen ersten Hohlrad 4 im Eingriff. Die vier ersten Planetenräder 3 sind mittels Bolzen 33 und Nadelkränzen 34 drehbar und beidseitig in einem ersten Planetenradträger 5 abgestützt.

Dieser Planetenradträger 5 gibt das vergrösserte Drehmoment über Schrauben 37 an das Sonnenrad 21 der zweiten Planetengetriebestufe weiter. Der Planetenradträger 5 mit dem daran befestigten zweiten Sonnenrad 21 zum Antreiben der zweiten Planetengetriebestufe ist mittels zylindrischer Rollen 19 und einem Käfig 20 auf dem Antriebselement 2 gelagert.

In der zweiten Planetengetriebestufe sind fünf zweite Planetenräder 3a mit dem zweiten Sonnenrad 21 und einem zweiten innen verzahnten topfförmigen Hohlrad 4a im Eingriff. Die fünf zweiten Planetenräder 3a stützen sich in dem zweiten Hohlrad 4a ab und geben das Drehmoment mittels Bolzen 33a und Nadelkränzen 34a, beidseitig gestützt, an einen zweiten Planetenradträger 5a ab. Dieser gibt, wie schon der Planetenradträger 5 der ersten Planetengetriebestufe, das vergrösserte Drehmoment über Schrauben 37a an das Sonnenrad 21a der nächsten, nämlich der dritten Planetengetriebestufe weiter. Der zweite Planetenradträger 5a mit dem daran befestigten dritten Sonnenrad 21a zum Antreiben der dritten Planetengetriebestufe ist wiederum, in identischer Weise wie bei der ersten Planetengetriebestufe, mittels zylindrischer Rollen und einem Käfig auf dem Antriebselement 2 gelagert.

In der dritten Planetengetriebestufe sind acht dritte Planetenräder 3b eingebaut, die sich in einem dritten Hohlrad 4b abstützen und ihr Moment über weitere Bolzen 33b und Nadelkränze 34b, nicht fliegend gestützt an einen dritten Planetenradträger 6 weiterleiten. Dieser Träger 6 ist mittels Schrauben 32 fest mit dem Gehäuse 17 der Getriebeeinheit verbunden, welches den Zahnriemen 18 antreibt.

Auf diese Art kann das Drehmoment des Elektromotors 46 in dem in der oberen Hälfte von Fig. 1 dargestellten Zustand über mehrere Stufen auf ein sehr hohes Niveau gebracht werden. In diesem Fall ist ein Pneumatikringkolben 10 mit Druckluft beaufschlagt und drückt die mit Schrauben 35 verbundenen Hohlräder 4, 4a, 4b nach links gegen den ortsfesten, nicht drehbaren Lagerzapfen 25, wo diese mit mehreren am ersten Hohlrad 4 angeordneten zylindrischen Stiften 7 in Bohrungen im Lagerzapfen 25 eingreifen. An Stelle von Stiften ist es auch vorgesehen, eine stirnseitige Verzahnung am ersten Hohlrad 4 und am Lagerzapfen 25 zu verwenden, mittels welcher ein entsprechender Formschluss hergestellt werden kann.

Ausgehend von dem in der unteren Hälfte von Fig. 1 dargestellten Zustand wird der zuvor beschriebene Zustand dadurch hergestellt, dass bei mit Druckluft beaufschlagtem Pneumatikringkolben 10 durch sehr langsames Drehen der Welle 1 des mit Achssteuerung ausgerüsteten Elektromotors 46 die zylindrischen Stifte 7 mit den Bohrungen im Lagerzapfen 25 in Übereinstimmung gebracht werden und sodann im Lagerzapfen 25 einrasten.

An der Hohlradgruppe 4, 4a, 4b greift auf der gegenüberliegenden Seite des Ringkolbens 10 ein Druckring 13 an, der mit einer Anzahl Schrauben-Druckfedern 11 dafür sorgt, dass bei einem Drucklosschalten des Ringkolbens 10 die ganze Hohlradgruppe 4, 4a, 4b wieder in die Stellung gemäss der unteren Hälfte von Fig. 1 (Grundstellung) zurück geschoben wird. Die Federn 11 stützen sich rückseitig auf einem hinteren Ring 13a ab.

In der in der oberen Hälfte von Fig. 1 gezeigten Stellung stehen die Hohlräder 4, 4a, 4b still und das Planetengetriebe ist als Gesamtes aktiv in sehr langsamer Drehung. Das heisst, dass der Zahnriemen 18 und das die Zahnriemenscheibe bildende Gehäuse 17 im konkreten Beispiel fast 19 Mal langsamer drehen als die Motorwelle 1 und gegenüber den still stehenden Hohlrädern 4, 4a, 4b eine Relativbewegung entsteht.

Aus diesem Grund ist ringkolbenseitig ein Gleitring 14a und federseitig ein Gleitring 14 fest auf den Hohlrädern 4, 4a, 4b montiert. Diese Gleitringe 14, 14a sorgen für verschleissfreies Gleiten auch unter dem Anpressdruck des Kolbens 10 und der Federn 11. Damit die einzelnen Federn 11 auf dem vorderen Ring 13 und dem hinteren Ring 13a positioniert sind, gibt es Federführungen vorne 12 und hinten 12c. Damit darüber hinaus auch der vordere Ring 13 gegenüber dem hinteren Ring 13a geführt ist, gibt es an drei Stellen, gleichmässig über den Umfang verteilt, spezielle Federführungen 12a mit Führungsbüchsen 12b.

Damit die Druckluft in das sich drehende Getriebe eingespeist werden kann, gibt es eine Speisung 15, die den Ringkolben 10 über eine Ringnut 15a und mehrere Bohrungen 6a im dritten Planetenradträger 6 versorgt. Diese Speisung 15 ist von einem ringförmigen Deckel 15b gebildet, welcher mit einem beidseitig abgedichteten Kugellager 16 auf dem dritten Planetenradträger 6 gelagert ist, wobei das Lager 16 mit einem Ring 15c axial fixiert ist. Das Gehäuse 17 mit Zahnriemen 18 ist über einen Deckel 29 auf der linken Seite auf einem Kugellager 9 befestigt und auf den stillstehenden Elementen 25, 26, 27 axial fest gelagert. Diese sind mit Schrauben 28 verbunden. Eine Wellendichtung 30 schliesst die linke Seite ab. Auf der Gegenseite liegt das Loslager 9a auf dem sich im Betrieb drehenden ersten Antriebsrad 2 axial frei auf. Ein Wellendichtring 31 schliesst hier ab. Die Abstützung nach aussen übernimmt auf dieser Seite das vordere Lager des Elektromotors 46. Dieser muss entsprechend genau fluchtend und höhengleich an der Getriebeeinheit angebaut werden. Die nötige Abstimmung kann beispielsweise mittels Einpassen der Stütze 27 links bezüglich Höhe und Form erreicht werden.

Zum Abschalten oder Kurzschliessen des Getriebes im Stillstand muss der Raum hinter dem Kolben 10 drucklos gemacht werden. Durch die Kraft der Federn 11 wird, ausgehend von der in der oberen Hälfte von Fig. 1 gezeigten Position, die Hohlradgruppe 4, 4a, 4b über den Gleitring 14 und der Druckkolben 10 über den Gleitring 14a nach rechts in die in der unteren Hälfte von Fig. 1 gezeigte Position geschoben. Durch sehr langsames Drehen der Motorwelle 1 werden die Stifte 7 in die entsprechenden Bohrungen im Flansch 38 geschoben, der mit Schrauben 39 am Antriebsrad 2 befestigt ist. In dieser Getriebestellung ist das erste Sonnenrad 2a einerseits direkt über die Stifte 7 mit der Hohlradgruppe 4, 4a, 4b verbunden und andererseits steht es in Verbindung mit den vier ersten Planetenrädern 3, die auch wieder mit dem ersten Hohlrad 4 im Eingriff stehen. Damit ist die gesamte Getriebeeinheit blockiert bzw. kurzgeschlossen und das die Riemenscheibe bildende Gehäuse 17 nimmt dieselbe Drehzahl an wie die Welle 1 des Elektromotors 46.

Die Darstellungen gemäss den Figuren 2 und 3 zeigen eine erfindungsgemässe Anordnung mit der Getriebeeinheit aus Fig. 1 und einer damit angetriebenen Stanzpresse 47, einmal in einer teilweisen Rückansicht (Fig. 2) mit dem so genannten Hauptantrieb und einmal in einer teilweisen Seitenansicht (Fig. 3) mit der Motoraufhängung.

Wie zu erkennen ist, ist der Elektromotor 46 mit der Getriebeeinheit auf einer Konsole 44 befestigt, welche mit Gummidämpfern auf einem Motorträger 45 befestigt ist, der wiederum am Pressenoberteil 47 befestigt ist. Der Motorträger 45 kann seitlich verschoben werden, um den Riemen 18 vorzuspannen. Das Schwungrad der Stanzpresse ist unter einer Verschalung 48 angeordnet und ein Riemenschutz 49 verhindert den Zugriff auf den Riemen 18.

Um eine einfache Überprüfung des Schaltzustands der Getriebeeinheit zu ermöglichen, ist es vorgesehen, eine der drei speziellen Federführungen 12a länger auszubilden und abgedichtet nach aussen zu führen, so dass deren axiale Position aussen sichtbar oder mit einem Positionssensor abgreifbar ist, zur Identifizierung des jeweiligen Schaltzustands der Getriebeeinheit.

Während in der vorliegenden Anmeldung bevorzugte Ausführungen der Erfindung beschrieben sind, ist klar darauf hinzuweisen, dass die Erfindung nicht auf diese beschränkt ist und auch in anderer Weise innerhalb des Umfangs der nun folgenden Ansprüche ausgeführt werden kann.

## Patentansprüche

1. Getriebeeinheit mit mehreren hintereinander geschalteten Planetengetriebestufen, welche jeweils ein Hohlrad (4, 4a, 4b), ein Sonnenrad (2a, 21, 21a) und mehreren an einem Planetenradträger (5, 5a, 6) gelagerte Planetenräder (3, 3a, 3b) umfassen, wobei jeweils das Sonnenrad (2a, 21, 21a) der nachfolgenden Planetengetriebestufe vom Planetenradträger (5, 5a) der vorhergehenden Planetengetriebestufe gebildet ist oder drehsteif in Rotationsrichtung dieses Planetenradträgers (5, 5a) mit diesem verbunden oder verbindbar ist,
mit einem Antriebselement (2), welches das Sonnenrad (2a) der ersten Planetengetriebestufe bildet oder drehsteif in Rotationsrichtung des Sonnenrades (2a) mit diesem verbunden oder verbindbar ist, und
mit einem Abtriebselement (17), welches den Planetenradträger (6) der letzten der hintereinander geschalteten Planetengetriebestufen bildet oder drehsteif in Rotationsrichtung dieses Planetenradträgers (6) mit diesem verbunden oder verbindbar ist,
wobei die Getriebeeinheit schaltbar ist, derart, dass wahlweise ein erstes oder ein zweites Übersetzungsverhältnis einstellbar ist,
**dadurch gekennzeichnet,**
**dass** zumindest ein Teil der Planetenradträger (5a, 5b, 6) der Planetengetriebestufen, insbesondere mit Wälzlagern (19, 20), auf dem Antriebselement (2) gelagert sind und dass der Abschnitt des Antriebselements (2), auf welchem die Planetenradträger (5a, 5b, 6) gelagert sind, im bestimmungsgemässen Betrieb das Drehmoment zum Antrieb des Sonnenrades (2a) der ersten Planetengetriebestufe überträgt.

2. Getriebeeinheit nach einem der vorangehenden Ansprüche, wobei das Sonnenrad (2a) der ersten Planetengetriebestufe an einem Ende des Antriebselements (2) angeordnet ist.

3. Getriebeeinheit nach einem der vorangehenden Ansprüche, wobei das Antriebselement (2) im Bereich des Sonnenrades (2a) der ersten Planetengetriebestufe gelagert ist, insbesondere in mindestens einem Wälzlager (23, 24), und insbesondere, wobei die Lagerung an einem im Betrieb ortfesten Bauteil (25) erfolgt.

4. Getriebeeinheit nach Anspruch 3, wobei die Lagerung als Festlagerung ausgebildet ist, insbesondere mit einem Zylinderrollenlager (24) als Axiallager und einem Nadellager (23) als Radiallager.

5. Getriebeeinheit nach einem der Ansprüche 3 bis 4, wobei zumindest ein Teil der Lagerung (24) innerhalb des Sonnenrades (2a) der ersten Planetengetriebestufe angeordnet ist.

6. Getriebeeinheit nach einem der vorangehenden Ansprüche, wobei der Abschnitt des Antriebselements (2), auf welchem die Planetenradträger (5a, 5b, 6) gelagert sind, insbesondere zusammen mit dem Sonnenrad (2a) der ersten Planetengetriebestufe als einstückiges Bauteil ausgebildet ist, insbesondere als einstückiger Hohlwellenkörper.

7. Getriebeeinheit nach einem der vorangehenden Ansprüche, wobei das Abtriebselement (17) ausgebildet ist zur Ankopplung an eine Arbeitsmaschine.

8. Getriebeeinheit nach Anspruch 7, wobei die Getriebeeinheit in ein Gehäuse (17) integriert ist, welches gleichzeitig das Abtriebselement (17) bildet und an seinem Aussenumfang eine Lauffläche für einen Keilriemen oder einen Flachriemen aufweist, oder eine Verzahnung (18) für einen Zahnriemen, eine Kette oder ein Zahnrad, zum Ankoppeln an ein entsprechendes Antriebselement einer Arbeitsmaschine.

9. Getriebeeinheit nach einem der.vorangehenden Ansprüche, wobei das Antriebselement (2) ausgebildet ist zur Ankopplung an einen Antriebsmotor.

10. Getriebeeinheit nach einem der vorangehenden Ansprüche, wobei die Hohlräder (4, 4a, 4b) sämtlicher Planetengetriebestufen von einem gemeinsamen, insbesondere aus mehreren Teilen (4, 4a, 4b) gebauten Bauteil (4, 4a, 4b) gebildet sind.

11. Getriebeeinheit nach einem der vorangehenden Ansprüche, wobei das erste Übersetzungsverhältnis 1:1 ist.

12. Getriebeeinheit nach Anspruch 11, wobei die Getriebeeinheit derartig ausgebildet ist, dass bei gewähltem ersten Übersetzungsverhältnis die Getriebeeinheit gesperrt ist.

13. Getriebeeinheit nach Anspruch 10 und nach Anspruch 12, wobei die Schaltbarkeit der Getriebeeinheit dadurch gegeben ist, dass das die Hohlräder (4, 4a, 4b) der Planetengetriebestufen bildende Bauteil wahlweise mit einer im Betrieb stillstehenden Körperlichkeit (25) oder mit dem Antriebselement (2) koppelbar ist.

14. Getriebeeinheit nach Anspruch 13, wobei die Getriebeeinheit derartig ausgebildet ist, dass das die Hohlräder (4, 4a, 4b) der Planetengetriebestufen bildende Bauteil zum wahlweisen Koppeln mit der im Betrieb stillstehenden Körperlichkeit (25) oder dem Antriebselement (2) axial zwischen einer ersten und einer zweiten Position verschiebbar ist, jeweils unter Erzeugung eines rotatorischen Kraft- und/oder Formschlusses mit der im Betrieb stillstehenden Körperlichkeit (25) bzw. mit dem Antriebselement (2).

15. Getriebeeinheit nach Anspruch 14, wobei die Getriebeeinheit derartig ausgebildet ist, dass das Verschieben des die Hohlräder (4, 4a, 4b) der Planetengetriebestufen bildenden Bauteils zumindest in eine der beiden Verschieberichtungen mittels eines pneumatischen oder hydraulischen Antriebs bewirkbar ist, insbesondere mittels einer oder mehrerer pneumatischer Kolben-Zylinder-Einheiten (10).

16. Getriebeeinheit nach Anspruch 15, wobei die Getriebeeinheit derartig ausgebildet ist, dass das Verschieben des die Hohlräder (4, 4a, 4b) der Planetengetriebestufen bildenden Bauteils in einer ersten der beiden Verschieberichtungen mittels des pneumatischen oder hydraulischen Antriebs (10) entgegen einer von einem oder mehreren elastischen Federelementen (11) erzeugten federnden Rückstellkraft bewirkbar ist und bei Drucklosschaltung des pneumatischen oder hydraulischen Antriebs (10) eine Rückstellung durch Verschiebung in der zweiten, der ersten Verschieberichtung entgegen gesetzten Verschieberichtung erfolgt.

17. Getriebeeinheit nach einem der vorangehenden Ansprüche, wobei die Planetengetriebestufen eine unterschiedliche Anzahl Planetenräder (3, 3a, 3b) aufweisen, derart, dass die Planetengetriebestufen je mehr Planetenräder (3, 3a, 3b) aufweisen, je mehr Planetengetriebestufen ihnen vorangeschaltet sind.

18. Getriebeeinheit nach einem der vorangehenden Ansprüche, wobei die Planetenräder (3, 3a, 3b) sämtlicher Planetengetriebestufen einen identischen Durchmesser aufweisen, und insbesondere identisch sind.

19. Getriebeeinheit nach einem der vorangehenden Ansprüche, wobei die Hohlräder (4, 4a, 4b) sämtlicher Planetengetriebestufen einen identischen Durchmesser aufweisen, und insbesondere identisch bezüglich ihres Verzahnungsmoduls sind.

20. Getriebeeinheit nach einem der vorangehenden Ansprüche, wobei das zweite Übersetzungsverhältnis eine Untersetzung grösser 1:15 ist.

21. Anordnung umfassend eine Getriebeeinheit nach einem der vorangehenden Ansprüche, und weiter umfassend
a) eine Stanzpresse mit einem Kurbel- oder Exzentertrieb zur Umwandlung der rotatorischen Bewegung einer Antriebswelle der Stanzpresse in die Stanzbewegung des Werkzeugs und mit einem mit der Antriebswelle koppelbaren oder gekoppelten Schwungrad; und
b) einen Antriebsmotor (46) zum Antreiben der Antriebswelle der Stanzpresse; wobei das Antriebselement (2) der Getriebeeinheit mit dem Antriebsmotor (46) gekoppelt oder über eine schaltbare Kupplung koppelbar ist und das Abtriebselement (17) der Getriebeeinheit mit der Antriebswelle der Stanzpresse oder dem Schwungrad gekoppelt oder über eine schaltbare Kupplung koppelbar ist.

22. Anordnung nach Anspruch 21, **dadurch gekennzeichnet, dass** der Antriebsmotor (46) und die Übersetzungsverhältnisse der Getriebeeinheit derartig dimensioniert sind, dass die maximale Stanzkraft, die im Betrieb mit demjenigen Übersetzungsverhältnis der Getriebeeinheit, bei welchem die langsamere Drehung der Antriebswelle resultiert, am Stössel der Stanzpresse erzeugbar ist, gleich gross oder grösser ist wie die maximale Stanzkraft, die im Betrieb mit dem Übersetzungsverhältnis der Getriebeeinheit, bei welchem die schnellere Drehung der Antriebswelle resultiert, am Stössel der Stanzpresse erzeugbar ist.

23. Anordnung nach einem der Ansprüche 21 bis 22, **dadurch gekennzeichnet, dass** das Schwungrad vom Gehäuse (17) der Getriebeeinheit gebildet ist.

## Claims

1. Gear train unit comprising a plurality of planetary gear train stages, comprising a ring gear (4, 4a, 4b), a sun gear (2a, 21, 21a) and a plurality of planet gears (3, 3a, 3b) supported on a planet gear carrier (5, 5a, 6), wherein the sun gear (2a, 21, 21a) of each following planetary gear train stage is formed by the planet gear carrier (5, 5a) of the preceding planetary gear train stage or is connected or connectable to this planet gear carrier in a torsionally rigid manner in rotational direction of this planet gear carrier (5, 5a),
comprising a drive element (2) forming the sun gear (2a) of the first planetary gear train stage or being connected or connectable to this sun gear in a torsionally rigid manner in rotational direction of this sun gear (2a),
and comprising an output element (17) forming the planet gear carrier (6) of the last of the planetary gear train stages which are connected one after the other or being connected or connectable to same in a torsionally rigid manner in rotational direction of this planet gear carrier (6),
wherein the gear train unit can be shifted in such a way that either a first or a second gear ratio can be set,
**characterized in that**
at least some of the planet gear carriers (5a, 5b, 6) of the planetary gear train stages are supported on the drive element (2) in particular by means of roller bearings (19, 20),
and **in that** the section of the drive element (2), on which the planet gear carriers (5a, 5b, 6) are supported, transmits the torque for driving the sun gear (2a) of the first planetary gear train stage in the intended operation.

2. Gear train unit according to one of the preceding claims, wherein the sun gear (2a) of the first planetary gear train stage is arranged at one end of the drive element (2).

3. Gear train unit according to one of the preceding claims, wherein the drive element (2) is supported in the area of the sun gear (2a) of the first planetary gear train stage, in particular by means of at least one roller bearing (23, 24), and in particular, wherein this supporting takes place on a component part (25) which is stationary in operation.

4. Gear train unit according to claim 3, wherein the support is designed as a fixed bearing, in particular with a cylinder roller bearing (24) as thrust bearing and a needle roller bearing (23) as journal bearing.

5. Gear train unit according to one of the claims 3 to 4, wherein at least a part of the support (24) is arranged within the sun gear (2a) of the first planetary gear train stage.

6. Gear train unit according to one of the preceding claims, wherein the section of the drive element (2), on which the planet gear carriers (5a, 5b, 6) are supported, is in particular of one-piece design together with the sun gear (2a) of the first planetary gear train stage, is in particular designed as hollow shaft body in one-piece design.

7. Gear train unit according to one of the preceding claims, wherein the output element (17) is adapted for being connected to a work machine.

8. Gear train unit according to claim 7, wherein the gear train unit is integrated into a housing (17), which at the same time forms the output element (17) and at its outer circumference comprises a running surface for a V-belt or a flat belt, or gear teeth (18) for a toothed belt, a chain or a gearwheel, for connection to a respective drive element of a work machine.

9. Gear train unit according to one of the preceding claims, wherein the drive element (2) is adapted for being connected to a drive motor.

10. Gear train unit according to one of the preceding claims, wherein die ring gears (4, 4a, 4b) of all planetary gear train stages are formed by a common component part (4, 4a, 4b), which in particular is composed of several parts (4, 4a, 4b).

11. Gear train unit according to one of the preceding claims, wherein the first gear ratio is 1:1.

12. Gear train unit according to claim 11, wherein the gear train unit is designed in such a manner that when the first gear ratio is set, the gear train unit is locked.

13. Gear train unit according to claim 10 and according to claim 12, wherein the shiftability of the gear train unit is executed in that the component part which forms the ring gears (4, 4a, 4b) of the planetary gear train stages can alternatively be coupled to a component (25) which in operation is static or to the drive element (2).

14. Gear train unit according to claim 13, wherein the gear train unit is designed in such a manner that the component part, which forms the ring gears (4, 4a, 4b) of the planetary gear train stages and is alternatively coupled to the component (25) which in operation is static or to the drive element (2), can axially be shifted between a first and a second position, thereby in each case generating a rotational frictional connection and/or positive locking with the component (25) which in operation is static or with the drive element (2), respectively.

15. Gear train unit according to claim 14, wherein the gear train unit is designed in such a manner that the shifting of the component part which forms the ring gears (4, 4a, 4b) of the planetary gear train stages can be effected by means of a pneumatic or hydraulic drive at least in one of the two shifting directions, in particular by means of one or several pneumatic piston-cylinder-units (10).

16. Gear train unit according to claim 15, wherein the gear train unit is designed in such a manner that the shifting of the component part which forms the ring gears (4, 4a, 4b) of the planetary gear train stages can be effected in a first of the two shifting directions by means of the pneumatic or hydraulic drive (10) against a resilient reset force which is generated by one or several elastic spring elements (11) and that a resetting takes place by a shifting in the second shifting direction which is opposite to the first shifting direction when the pneumatic or hydraulic drive (10) is depressurized.

17. Gear train unit according to one of the preceding claims, wherein the planetary gear train stages have different numbers of planet gears (3, 3a, 3b), such that the planetary gear train stages have a plurality of planet gears (3, 3a, 3b) the more planetary gear train stages are preceding them.

18. Gear train unit according to one of the preceding claims, wherein the planet gears (3, 3a, 3b) of all planetary gear train stages have an identical diameter, and in particular are identical.

19. Gear train unit according to one of the preceding claims, wherein the ring gears (4, 4a, 4b) of all planetary gear train stages have an identical diameter, and in particular are identical with regard to their teeth modulus.

20. Gear train unit according to one of the preceding claims, wherein the second gear ratio is a gear reduction of more than 1:15.

21. Arrangement comprising a gear train unit according to one of the preceding claims, and further comprising
a) a stamping press having a crank gear or an eccentric gear for converting the rotational movement of a drive shaft of the stamping press into the stamping movement of stamping tools and having a flywheel that is coupled or can be coupled to the drive shaft; and
b) a drive motor (46) for driving the drive shaft of the stamping press;
wherein the drive element (2) of the gear train unit is coupled to or can be coupled via a shiftable coupling to the drive motor (46) and the output element (17) of the gear train unit is coupled to or can be coupled via a shiftable coupling to the drive shaft of the stamping press or to the flywheel.

22. Arrangement according to claim 21, **characterized in that** the drive motor (46) and the gear ratios of the gear train unit are dimensioned in such a manner that the maximum stamping force, which can be generated at the ram of the stamping press when operating the press with those gear ratio of the gear train unit in which the more slow rotation of the drive shaft results, is equal to or larger than the maximum stamping force, which can be generated at the ram of the stamping press when operating the press with those gear ratio of the gear train unit in which the faster rotation of the drive shaft results.

23. Arrangement according to one of the claims 21 to 22, **characterized in that** the flywheel is formed by the housing (17) of the gear train unit.

## Revendications

1. Train d'engrenage comprenant une pluralité de stages de train d'engrenage, comprenant une couronne (4, 4a, 4b), un planétaire (2a, 21, 21a) et une pluralité d'engrenages planétaires (3, 3a, 3b) supportés sur un porteur d'engrenage planétaire (5, 5a, 6), le planétaire (2a, 21, 21a) de chaque stage de train d'engrenage suivant étant formé par le porteur d'engrenage planétaire (5, 5a) du stage de train d'engrenage antérieur ou étant connecté ou connectable à ce porteur d'engrenage planétaire (5, 5a) de manière rigide en torsion dans un sens de rotation de ce porteur d'engrenage planétaire (5, 5a),
avec un élément de transmission (2) formant le planétaire (2a) du premier stage de train planétaire ou étant connecté ou connectable à ce planétaire de manière rigide en torsion dans un sens de rotation de ce planétaire (2a),
avec un élément de sortie (17) formant le porteur d'engrenage planétaire (6) du dernier des stages de train d'engrenage connectés l'un après l'autre ou étant connectés ou connectables de manière rigide en torsion dans un sens de rotation de ce porteur d'engrenage planétaire (6),
le train d'engrenage pouvant être commuté de sorte que soit un premier ou un deuxième rapport de transmission puisse être assigné,
**caractérisé en ce qu'**au moins une partie des porteurs d'engrenage planétaire (5a, 5b, 6) des stages de train d'engrenage étant supportés sur l'élément de transmission (2), particulièrement par des roulements à rouleaux (19, 20),
et **en ce que** la section de l'élément de transmission (2), sur lequel les porteurs d'engrenage planétaires (5a, 5b, 6) sont supportés, transmet le couple pour actionner le planétaire (2a) du premier stage de train d'engrenage, dans le mode d'opération prévu.

2. Train d'engrenage selon la revendication 1, le planétaire (2a) du premier stage de train d'engrenage étant arrangé à une extrémité de l'élément de transmission (2).

3. Train d'engrenage selon l'une des revendications précédentes, l'élément de transmission (2) étant supporté dans la région du planétaire (2a) du premier stage de train d'engrenage, particulièrement par au moins un roulement à rouleaux (23, 24), et particulièrement ce support s'effectuant sur un composant (25) stationnaire en opération.

4. Train d'engrenage selon la revendication 3, le support étant conçu comme support fixe, particulièrement avec un roulement à rouleaux cylindrique (24) comme palier de roulement et un roulement à aiguilles (23) comme palier d'essieu.

5. Train d'engrenage selon l'une des revendications 3 à 4, au moins une partie du support (24) étant arrangée dans le planétaire (2a) du premier stage de train d'engrenage.

6. Train d'engrenage selon l'une des revendications précédentes, la section de l'élément de transmission (2), sur laquelle les porteurs d'engrenage planétaire (5a, 5b, 6) sont supportés, étant particulièrement en une pièce avec le planétaire (2a) du premier stage de train d'engrenage, étant particulièrement conçue comme un corps d'arbre creux en une pièce.

7. Train d'engrenage selon l'une des revendications précédentes, l'élément de sortie (17) étant adapté à être connecté à une machine de travail.

8. Train d'engrenage selon la revendication 7, le train d'engrenage étant intégré dans une carcasse (17) qui au même temps forme l'élément de sortie (17) ayant une surface de roulement pour une courroie en forme de V ou une courroie plate à sa circonférence extérieure, ou des dents d'engrenage (18) pour une courroie dentée, une chaîne ou un pignon, pour une connexion à un élément de transmission d'une machine de travail.

9. Train d'engrenage selon l'une des revendications précédentes, l'élément de transmission (2) étant adapté à être connecté à un moteur d'entraînement.

10. Train d'engrenage selon l'une des revendications précédentes, les couronnes (4, 4a, 4b) de tous les stages de train d'engrenage étant formées par un composant commun (4, 4a, 4b), qui se compose particulièrement de plusieurs parties (4, 4a, 4b).

11. Train d'engrenage selon l'une des revendications précédentes, le premier rapport de transmission étant 1:1.

12. Train d'engrenage selon la revendication 11, le train d'engrenage étant conçu de sorte que le train d'engrenage soit verrouillé quand le premier rapport de transmission est choisi.

13. Train d'engrenage selon les revendications 10 et 12, la possibilité de commutation du train d'engrenage étant réalisée de manière que le composant formant les couronnes (4, 4a, 4b) des stages de train d'engrenage puisse alternativement être couplée à un composant (25) statique en opération ou à l'élément de transmission (2).

14. Train d'engrenage selon la revendication 13, le train d'engrenage étant conçu de sorte que le composant formant les couronnes (4, 4a, 4b) des stages de train d'engrenage et qui est alternativement couplé au composant (25) statique en opération ou à l'élément de transmission (2) peut être déplacé axialement entre une première et une deuxième position, par cela générant toujours une connexion à frottement rotatif et/ou un verrouillage positif avec le composant (25) statique en opération ou bien avec l'élément de transmission (2).

15. Train d'engrenage selon la revendication 14, le train d'engrenage étant conçu de sorte que le déplacement du composant formant les couronnes (4, 4a, 4b) des stages de train d'engrenage peut être effectué par un entraînement pneumatique ou hydraulique au moins dans une de deux directions de déplacement, particulièrement par une des plusieurs unités piston/vérin pneumatiques (10).

16. Train d'engrenage selon la revendication 15, le train d'engrenage étant conçu de sorte que le déplacement du composant formant les couronnes (4, 4a, 4b) des stages de train d'engrenage puisse être effectué dans une première des deux directions de déplacement par l'entraînement pneumatique ou hydraulique (10) contre une force élastique de réinitialisation généré par un ou plusieurs éléments de ressort élastiques (11) et qu'une réinitialisation est effectuée par un déplacement dans la deuxième direction de déplacement, qui est opposée à la première direction, quand l'entraînement pneumatique ou hydraulique (10) est dépressurisé.

17. Train d'engrenage selon l'une des revendications précédentes, les stages de train d'engrenage ayant des différents nombres d'engrenages planétaires (3, 3a, 3b), de sorte que le nombre d'engrenages planétaires (3, 3a, 3b) des stages de train d'engrenage augmente quand le nombre des stages de trains d'engrenage qui les précédent augmente.

18. Train d'engrenage selon l'une des revendications précédentes, les engrenages planétaires (3, 3a, 3b) de tous les stages de train d'engrenage ayant un diamètre identique, particulièrement étant identiques.

19. Train d'engrenage selon l'une des revendications précédentes, les couronnes (4, 4a, 4b) de tous les stages de train d'engrenage ayant un diamètre identique, particulièrement étant identiques par rapport à leur nombre de dents.

20. Train d'engrenage selon l'une des revendications précédentes, le deuxième rapport de transmission étant une réduction supérieure à 1:15.

21. Arrangement comprenant un train d'engrenage selon l'une des revendications précédentes, et en outre comprenant
a) une presse de découpage ayant un pédalier ou un engrenage excentrique afin de convertir le mouvement rotatif d'un axe de transmission de la presse de découpage en le mouvement de l'outil de découpage et ayant un volant couplé ou qui peut être couplé à l'axe de transmission;
b) un moteur (46) pour commander l'axe de transmission de la presse de découpage;
l'élément de transmission (2) du train d'engrenage étant couplé au moteur de transmission (46) par un couplage commutable et l'élément de sortie (17) du train d'engrenage étant couplé ou pouvant être couplé à l'axe de transmission de la presse de découpage par un couplage commutable ou au volant.

22. Arrangement selon la revendication 21, **caractérisé en ce que** le moteur de transmission (46) et les rapports de transmission du train d'engrenage sont dimensionnés de sorte que la force maximale de découpage, qui peut être générée au poussoir de la presse de découpage quand la presse est opérée avec le rapport de transmission du train d'engrenage avec lequel la plus lente rotation de l'axe de transmission résulte, soit égale ou supérieure à la force maximale de découpage, qui peut être générée au poussoir de la presse de découpage quand la presse est opérée avec le rapport de transmission du train d'engrenage avec lequel la plus rapide rotation de l'axe de transmission résulte.

23. Arrangement selon l'une des revendications 21 à 22, **caractérisé en ce que** le volant est formé par la carcasse (17) du train d'engrenage.
